# EUROPÄISCHE PATENTSCHRIFT

(11) **EP 2 999 385 B1**
(45) Veröffentlichungstag und Bekanntmachung des Hinweises auf die Patenterteilung: **26.07.2017**
(21) Anmeldenummer: 14725174.8
(22) Anmeldetag: 20.05.2014
(51) Int. Cl.: A47J 37/07

(54) **EINRICHTUNG ZUM GRILLIEREN UND GAREN**
DEVICE FOR GRILLING AND COOKING
DISPOSITIF POUR GRILLER ET CUIRE

(30) Priorität: 21.05.2013 CH 9882013; 01.11.2013 CH 18432013
(43) Veröffentlichungstag der Anmeldung: 30.03.2016
(73) Patentinhaber: Maurer, Martin, 5412 Gebenstorf (CH); Wetzel AG, 5413 Birmenstorf (CH)
(72) Erfinder: Maurer, Martin, 5412 Gebenstorf (CH)
(74) Vertreter: Frommhold, Joachim
(86) Internationale Anmeldenummer: PCT/EP2014/060332
(87) Internationale Veröffentlichungsnummer: WO 2014/187820

(56) Entgegenhaltungen:
- EP-A1- 2 345 356
- GB-A- 2 164 245
- US-A- 4 034 662
- US-A1- 2007 277 800

## Beschreibung

Die Erfindung betrifft eine Einrichtung zum Grillieren und Garen von Lebensmitteln nach dem Oberbegriff des Patentanspruchs 1.

Die Einrichtung umfasst eine Wanne aus Stahl mit einem Boden, seitlichen Wänden und einer, weitgehend horizontal, ggf. mit leichtem Gefälle nach innen angeordneten Heizfläche zum Garen von Lebensmitteln, die mit den seitlichen Wänden der Wanne verbunden ist.

Vorrichtungen und Einrichtungen zum Grillieren und Garen von Lebensmitteln gelangen sowohl für individuelle Belange wie auch im gewerblichen Bereich zur Anwendung, im Freien wie auch im Küchenbereich.

Bekannt sind zum Beispiel Grillgeräte unterschiedlicher Bauart und Betriebsweise, in denen die notwendige Wärmeenergie zum Garen eines Lebensmittels mit verschiedenen Medien erzeugt wird.

Weit verbreitet sind Grillgeräte mit einem Behälter, der im unteren Bereich Mittel zum Abbrennen von Gasen oder Feststoffen und einen beabstandet oberhalb befindlichen Grillrost aufweist, wobei die beim Abrennen erzeugte Wärmeenergie in möglichst hohem Grad auf den Grillrost geführt werden soll.

Als Brennmaterialien sind Holzkohle und brennbare Gase weit verbreitet. Die EP 0653917 B1 offenbart einen Gasgrill zur Verwendung im Freien, bei dem Gasbrenner ringförmig im Bodenbereich eines kugligen Behälters angeordnet sind. Unterhalb der Gasbrenner ist ein weiterer Behälter zum Auffangen von herabtropfendem Fett u. a. angeordnet. Solche Fetttropfen werden von einer kegelförmigen Wandung vom Grillrost in den Behälter zum Auffangen geleitet, so dass sie nicht auf den Brennerring gelangen können.

Holzkohlegrills sind grundsätzlich ähnlich aufgebaut, wobei anstelle des Gasbrenners ein luftdurchströmbarer Brennrost vorgesehen ist, auf dem die Holzkohle verglüht. Die Dokumente GB 2 164 245 A und US 2007/0277800 A1 offenbaren Holzkohlegrills. Ein abtropfen von Fett oder anderen Flüssigkeiten in die glühende Holzkohle kann durch Auffangschalen oder dergleichen, in denen das zu garende Lebensmittel auf dem Grillrost liegt vermieden werden.

In anderer Ausführung kann mit Gasbrennern auch Gestein, zum Beispiel Lavasteine erwärmen, die dann als Wärmespeicher für das zu garende Lebensmittel dienen.

Um Nachteile der vorgenannten Grillgeräte zu vermeiden, wurde in den EP 2143362 B1 und EP 2581003 A1 eine Vorrichtung zum Garen von Lebensmitteln aus Stahl oder Gusseisen vorgeschlagen, die ein direktes Garen bei optimaler Gartemperatur über einen längeren Zeitraum und unter Verwendung von Brennmaterialien auf Holzbasis ermöglichen sollte. Hierzu umfasst die Vorrichtung eine Feuerungswanne in Form einer geschnittenen Kugel- oder Ellipsoidschale mit einer Heizfläche. Die Heizfläche ist so gestaltet, dass Lebensmittel unmittelbar darauf gegart werden können und ist eine im Wesentlichen rechtwinklig zur Rotationsachse der Feuerungswanne verlaufende Kreisringfläche. Die Aussenkante der Heizfläche ist mit der Schnittkante der Feuerungswanne fest verbunden. In der Feuerungswanne ist ein Zwischenboden und im tiefstliegenden Bereich der Feuerungswanne ist eine Öffnung zum Ausleiten von Asche vorgesehen, wobei koaxial gelegen eine solche Öffnung auch im Zwischenboden gegeben sein soll.

Die Feuerungswanne ist auf einem Ring, der auf dem Untergrund liegt beweglich gelagert. Die Öffnung zum Ausleiten von Asche in der Feuerungswanne endet auf dem Untergrund.

Die Aufgabe der Erfindung besteht nun darin, eine derartige Vorrichtung zum Garen von Lebensmitteln oder dergleichen unter Meidung der Nachteile des Standes der Technik weiter zu verbessern. Insbesondere soll sie einfach herstellbar und sicher zu handhaben sein.

Die Aufgabe ist mit den kennzeichnenden Merkmalen des Patentanspruchs 1 gelöst. Die erfindungsgemässe Einrichtung zum Grillieren und Garen von Lebensmitteln umfasst eine Wanne, die zumindest einen Zwischenboden, seitliche Wände und eine Heizfläche aufweist, wobei die Heizfläche im Wesentlichen senkrecht und zumindest entlang einer der seitlichen Wände der Wanne angeordnet ist. Unterhalb des Zwischenbodens ist eine ein- und ausziehbare Schublade vorgesehen, die an einer der seitlichen Wände ausziehbar ist.
Die erfindungsgemässe Vorrichtung resp. die Wanne weist bevorzugt eine kubische Grundform auf.

Bevorzugte Ausführungsformen sind in den abhängigen Ansprüchen offenbart.

Die Wanne kann einen kubischen, rechteckigen, drei- oder vieleckigen oder auch halbrunden Querschnitt aufweisen. Die seitlichen Wände umfassen Seitenwänden, Frontseite und Rückwand in unterschiedlicher Ausformung.

Der Zwischenboden ist zumindest im mittleren Bereich, d. h. unterhalb des offenen Bereichs der Heizfläche angeordnet und im Bereich der Schublade geschlitzt und/oder rostartig gestaltet.

Die Einrichtung steht bevorzugt auf Füssen, die am Zwischenboden oder an den seitlichen Wänden angeordnet sind, wobei weiterhin bevorzugt die Füsse einen Abstand der Unterkanten der seitlichen Wände vom Boden ermöglichen. Zumindest sind sie gleich lang.
Anstelle der Füsse könnten auch die seitlichen Wände nach unten verlängert und weiterhin nach innen abgekantet ausgebildet sein.

Weiterhin kann auch ein unterer, durchgehender und geschlossener Boden parallel zum Zwischenboden vorgesehen sein, der gleichfalls an den seitlichen Wänden angeschweisst ist.

Die Wanne kann auch mit einem separaten, innen liegenden und ggf. verstärkenden Rahmen versehen sein, an dem die Teile der Wanne befestigbar sind, inbesondere mittels einer Schweissverbindung, resp. die Wände könnten zusätzlich am Rahmen angeschweisst werden.

Die Heizfläche kann sich rahmenförmig überdeckend entlang der seitlichen Wände der Wanne oder zumindest über Teile derselben erstrecken, zumindest jedoch eine Seitenwand derselben umlaufen. Und sie ist im Wesentlichen horizontal ausgerichtet.

Vorteilhaft ist die unterhalb des Zwischenbodens ein- und ausziehbare Schublade unterhalb des geschlitzten und/oder rostartigen Bereichs des Zwischenboden anordenbar und an einer der seitlichen Wände ausziehbar.

Die Heizfläche kann nach innen geneigt sein, bevorzugt mit einem Winkel bis ca. 5°. Entlang der Seitenwände überdeckt sie Teilbereiche der oben offenen Wanne, wobei sie sich vollständig oder nur teilweise entlang der Seitenwände erstrecken kann.

Die Heizfläche besteht aus Edelstahl, während die anderen Teile der Wanne bevorzugt aus Cortenstahl bestehen.

Die Wände können auch doppelt ausgeführt sein, mit Schamottsteinen als Wärmespeicher dazwischen und zur Verhinderung einer zu hohen Temperatur an den Aussenwänden. Der Grill kann weiterhin auch mobil ausgebildet sein, zum Beispiel mit einem Fahrgestell oder dergleichen.

Die erfindungsgemässe Einrichtung ist korrosionsarm, gewährleistet einen hohen Komfort beim Grillieren über offenem Holz- oder Kohlefeuer und einen sicheren Stand hierbei. Anfallende Asche kann ohne Beeinträchtigung der Umwelt entnommen und entsorgt werden.

Die Erfindung wird nachfolgend in einem Ausführungsbeispiel anhand einer Zeichnung näher beschrieben. In der Zeichnung zeigt die
- Fig. 1:: die erfindungsgemässe Einrichtung zum Grillieren und Garen von Lebensmitteln in einer perspektivischen Darstellung im Schnitt,
- Fig. 2:: die erfindungsgemässe Einrichtung in einer weiteren Ausführungsform,
- Fig. 3:: eine Schublade der erfindungsgemässen Einrichtung,
- Fig. 4:: die erfindungsgemässe Einrichtung in einer dritten Ausführungsform.

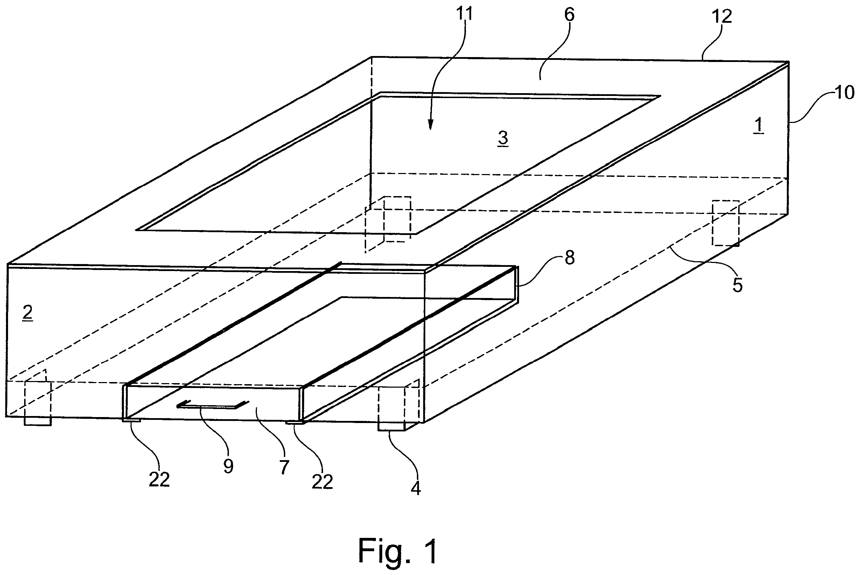

Eine erfindungsgemässe Einrichtung umfasst in der Ausführungsform nach Fig. 1 eine feuerfeste, kubische Wanne 12 aus Cortenstahl, deren Längswände 1, Frontseite 2, Rückwand 3 und eine Heizfläche 6 an den jeweiligen Kanten miteinander verschweisst sind. Ein Zwischenboden 5 ist senkrecht dazu und parallel und beabstandet vom Untergrund sowie zur Heizfläche 6 durch Schweissen eingezogen.
In jeder Ecke der Wanne ist auf der Unterseite des Zwischenbodens 5 ein Fuss 4 aus Stahl angeschweisst oder angeschraubt, der etwas länger als der Abstand vom Zwischenboden 5 zur Unterkante der Längswände 1, Frontseite 2 sowie der Rückwand 3 ist. Der Bodenbereich ist bis auf eine Schublade 8 zum Auffangen der Asche offen.

Im Beispiel weisen die Wände 1, 2 und 3 eine Länge von 1200 mm und eine Höhe von 420 mm auf.

Auch die übrigen Wände, der Zwischenboden 5 sowie eine Schublade 8 bestehen aus Cortenstahl, einer Dicke von 6mm. Unterhalb des Zwischenbodens 5 ist eine ein- und ausziehbare Schublade 8 vorgesehen, die unterhalb eines geschlitzten und/oder rostartigen Bereichs des Zwischenboden anordenbar ist. Die Schublade 8 ist auf zwei parallel am Zwischenboden 5 angeordneten Führungsblechen 22 gleitend gelagert und frontseitig mit einem Griff 9 versehen, so dass sie einfach durch eine Schubladenöffnung 7, zum Beispiel an der Frontseite 2 herausgezogen und eingesetzt werden kann. Sie könnte auch seitlich oder nach hinten ausziehbar angeordnet sein.
Die Führungsbleche 22 sind zum Beispiel U- oder L-förmig und bevorzugt am Zwischenboden 5 angeschweisst.

Die Heizfläche 6 besteht aus Edelstahl und ist gleichfalls an den Kanten mit den Seitenwänden 1, der Frontseite 2 und der Rückwand 3 verschweisst.

Die Seitenkanten 10 sind mit dichten, durchgehenden Schweissnähten versehen.

Sämtliche aussenliegenden Schweissnähte sind verschliffen. Die Heizfläche 6 aus Edelstahl ist z. B. 10 mm dick und rahmenförmig, die Seitenwände der Wanne 12 vollständig umlaufend mit breiter Auflagefläche von 150 - 300 mm für das zu garende Gut. Die verbleibende rechteckige Öffnung 11 gewährleistet ein optimales verbrennen bzw. verglühen des auf dem Zwischenboden 5 befindlichen Brennmaterials. Als Brennmaterial kommt bevorzugt Holz oder Holzkohle zur Anwendung. Es brennt auf dem Zwischenboden 5 über der Schublade 8 für die Asche ab. Im Bereich der Holzauflage ist der Zwischenboden geschlitzt oder rostartig, einerseits zum Durchfall der Asche in die Schublade 8 und andererseits zur Belüftung der Glut.

Die Längswände 1, wie auch die Rückwand 3 sind entweder geschlossen oder können bevorzugt oberhalb des Zwischenbodens 5 mit Durchbrüchen und Ornamenten verziert sein, ggf. auch die Frontseite 2, 18.

Die Breite der Auflagefläche der Heizfläche 6 ermöglicht andererseits einen guten Schutz vor der Glut und dennoch einen hohen Wärmeeintrag von unten durch die Glut sowie auch reflektierend von den Seitenwänden. Die Temperatur nimmt dabei von der Mitte zum Aussenrand hin ab, was vielfältige Nutzungsmöglichkeiten des Garens unterschiedlicher Lebensmittel und des blossen Erwärmens oder des Warmhaltens gegarter Lebensmittel eröffnet.

Vorzugsweise ist die Heizfläche 6 noch ein wenig nach innen geneigt, zum Beispiel mit einem Winkel bis ca. 5° in Bezug auf die Seitenkanten 10. Somit laufen auch sämtliche, aus den Lebensmitteln austretenden Flüssigkeiten ab. Sie können entweder in der Glut verdampfen oder verbrennen oder es kann eine Auffangrinne mit Sammelbehälter an der Innenkante der Heizfläche 6 vorgesehen sein.

Bei längerem Nichtgebrauch kann die Einrichtung auf eine Seitenwand 1 gekippt werden.

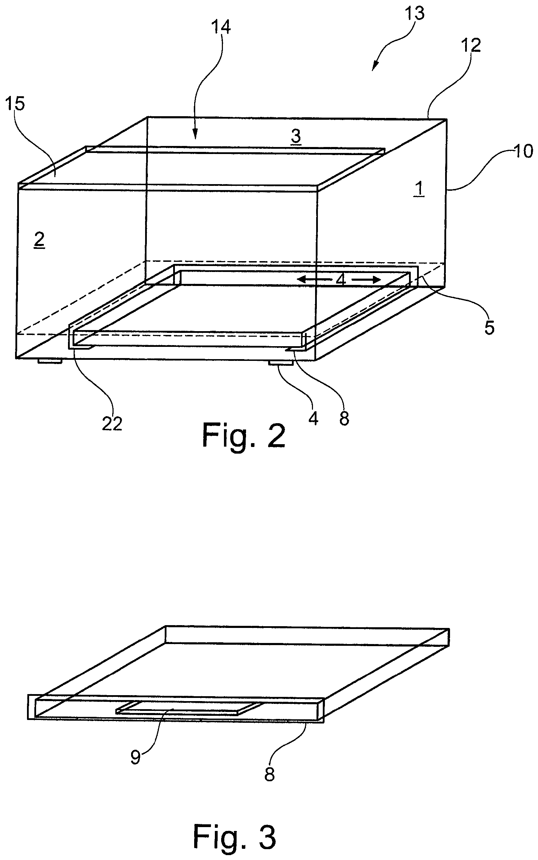

Bei einer Ausführungsform nach Fig. 2 weist die erfindungsgemässe Einrichtung beispielhaft eine die Öffnung 14 teilweisende überdeckende Heizfläche 15 auf. Der verbleibende Teil der Öffnung 14 ist zwischen einer Rückfront 13 bzw. Rückwand 3 der Wanne 12 und der Heizfläche 14 frei und ohne Heizfläche 15 ausgeführt. Die Heizfläche 15 ist dabei breiter ausgeführt als in der ersten Ausführungsform (Fig. 1). Die Schublade 8 ist nach hinten an der Rückfront 13 im Bereich der Öffnung 14 durch die Schubladenöffnung 7 ausziehbar.

Bei einer solchen Ausführung der Einrichtung ist der Querschnitt der Wanne 12 bevorzugt kleiner als in der ersten Ausführungsform. Der Querschnitt kann auch dreieckig, vieleckig (polygonal) oder halbrund o. a. sein, wobei die Heizfläche 14 dann ebenfalls dreieckig, vieleckig oder halbrund geformt ist resp. sein kann.

Die einzelnen Teile der Einrichtung bestehen wiederum aus Cortenstahl mit einer Blechstärke 3-8mm. Die Heizfläche 14 besteht analog zur ersten Ausführungsform aus Edelstahl, bei geringeren Abmessungen der Einrichtung im Gegensatz zur ersten Ausführungsform mit einer Blechstärke 4-10mm.

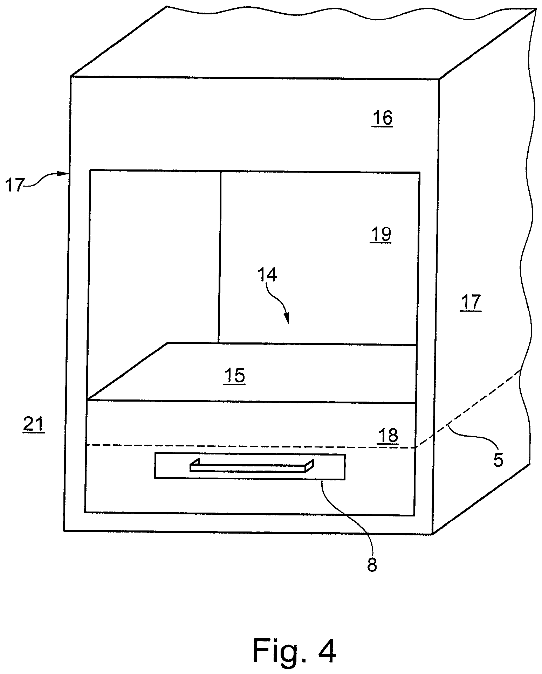

Bei einer dritten Ausführungsform der erfindungsgemässe Einrichtung (Fig. 4) ist diese in einem Holzstapel 22, einer Holzwand o. dgl. angeordnet. Sämtliche Wände, die das Holz o. dgl. berühren, d. h. zumindest die Längswände 17, die Rückwand 19 und der Boden 20 sind doppelwandig ausgeführt und mit einem wärmeisolierenden Stoff, zum Beispiel Schamotte- oder Keramikziegel gefüllt.
Bei der dritten Ausführungsform der erfindungsgemässen Einrichtung steht diese gegenüber der zweiten Ausführungsformen nach Fig. 2 faktisch auf der Frontseite, die nun einen Boden 20 bildet. Die Heizfläche 15 ragt etwa parallel zum Boden 20 in den Innenraum resp. die Öffnung 14. Die Schublade 8 ist wiederum nach vorn ausziehbar zwischen dem Zwischenboden 5 und dem Boden 20 angeordnet.

Anstelle einer vierten seitlichen Wand ist auf die Längswände 17 und die Rückwand 19 ein Cheminee 16 aufgesetzt zwecks Rauchabzug und Sicherung gegen Funkenflug.
Auch die holzberührenden Wände des Cheminees 16 und die Rückwand sind doppelwandig ausgeführt und mit einem wärmeisolierenden Stoff, zum Beispiel Schamotte- oder Keramikziegel gefüllt.

### Liste der Bezugszeichen

- 1: Längswand
- 2: Frontseite
- 3: Rückwand
- 4: Fuss
- 5: Zwischenboden
- 6: Heizfläche
- 7: Schubladenöffnung
- 8: Schublade
- 9: Griff
- 10: Seitenkante
- 11: Öffnung
- 12: Wanne
- 13: Rückfront
- 14: Öffnung
- 15: Heizfläche
- 16: Cheminee
- 17: Längswand
- 18: Frontseite
- 19: Rückwand
- 20: Boden
- 21: Holzstapel
- 22: Führungsblech

## Patentansprüche

1. Einrichtung zum Grillieren und Garen von Lebensmitteln umfassend eine Wanne aus Stahl mit seitlichen Wänden und einer, weitgehend horizontal, ggf. mit leichtem Gefälle nach innen angeordneten Heizfläche zum Garen von Lebensmitteln, die mit den seitlichen Wänden verbunden ist,
**dadurch gekennzeichnet, dass** die Wanne (12) einen parallel zur Heizfläche (6, 15)angeordneten, rostartigen Zwischenboden (5) umfasst, wobei die Heizfläche (6, 15) zumindest entlang einer der seitlichen Wände der Wanne (12) angeordnet ist, und dass an der Unterseite des Zwischenbodens (5) eine Schublade (8) vorgesehen ist, die gleitend gelagert ist und durch eine Schubladenöffnung (7) in einer der seitlichen Wände ausziehbar ist.

2. Einrichtung nach Anspruch 1, **dadurch gekennzeichnet, dass** die Heizfläche (6, 15) im Wesentlichen senkrecht zu den seitlichen Wände der Wanne (12) angeordnet ist.

3. Einrichtung nach Anspruch 1 oder 2, **dadurch gekennzeichnet, dass** sie mit einem geschlossenen Boden (20) versehen ist.

4. Einrichtung nach Anspruch 1 oder 2, **dadurch gekennzeichnet, dass** am Zwischenboden (5) oder an den seitlichen Wänden Füsse (4)angeordnet sind, wobei die Füsse (4) gleichlang oder länger sind als der Abstand zwischen dem Zwischenboden (5) und der Unterkante der seitlichen Wände ist.

5. Einrichtung nach einem der Ansprüche 1 bis 4, **dadurch gekennzeichnet, dass** die Schublade (8) an, am Zwischenboden 5 angeordneten Führungsblechen (22) gleitend gelagert ist.

6. Einrichtung nach einem der Ansprüche 1 bis 5, **dadurch gekennzeichnet, dass** die Heizfläche (6) rahmenförmig zumindest in Teilen überdeckend entlang der seitlichen Wände der Wanne (12) gestaltet ist.

7. Einrichtung nach einem der Ansprüche 1 bis 5, **dadurch gekennzeichnet, dass** die Heizfläche (6, 15) entlang einer Frontseite (18) der Wanne (12) angeordnet ist.

8. Einrichtung nach einem der Ansprüche 1 bis 7, **dadurch gekennzeichnet, dass** sie mit einem Rahmen versehen ist, an dem die seitlichen Wände und die Heizfläche (6, 15) angeordnet sind.

9. Einrichtung nach einem der Ansprüche 1 bis 8, **dadurch gekennzeichnet, dass** der Zwischenboden (5) im Bereich über der Schublade (8) mit Schlitzen versehen und/oder rostartig gestaltet ist.

10. Einrichtung nach einem der Ansprüche 1 bis 9, **dadurch gekennzeichnet, dass** die Heizfläche (6, 15) nach innen zum Zwischenboden (5) hin geneigt ist, bevorzugt mit einem Winkel bis ca. 5°.

11. Einrichtung nach einem der Ansprüche 1 bis 10, **dadurch gekennzeichnet, dass** die Heizfläche (6, 15) aus Edelstahl besteht, während die anderen Teile der Wanne (12) aus Cortenstahl oder Edelstahl bestehen.

12. Einrichtung nach einem der Ansprüche 1 bis 11, **dadurch gekennzeichnet, dass** der Querschnitt der Wanne (12) kubisch, dreieckig, vieleckig oder halbrund ist.

13. Einrichtung nach einem der Ansprüche 1 bis 12, **dadurch gekennzeichnet, dass** die Heizfläche (6, 15) vollständig oder nur teilweise entlang der seitlichen Wände der Wanne (12) umlaufend ist.

14. Einrichtung nach einem der Ansprüche 1 bis 13, **dadurch gekennzeichnet, dass** die seitlichen Wände Längswände (1, 17), eine Frontseite (2, 18) und eine Rückwand (3, 19) umfassen.

15. Einrichtung nach einem der Ansprüche 4 bis 14, **dadurch gekennzeichnet, dass** zumindest die Längswände (17), die Rückwand (19) und der Boden (20) doppelwandig ausgeführt und bevorzugt mit einem wärmeisolierenden Stoff gefüllt sind.

16. Einrichtung nach einem der Ansprüche 4 bis 15, **dadurch gekennzeichnet, dass** auf die Längswände (17) und die Rückwand (19) ein Cheminee (16) aufgesetzt ist.

17. Einrichtung nach einem der Ansprüche 1 bis 16, **dadurch gekennzeichnet, dass** die Längswände (1) und/oder die Rückwand (3) und/oder die Frontseite (2, 18) durchgehend sind und/oder oberhalb des Zwischenbodens (5) mit Durchbrüchen und Ornamenten versehen sind.

## Claims

1. A device for grilling and cooking food comprising a steel container having side walls and a largely horizontal heating surface, possibly arranged sloping gently inwards, for cooking food, said heating surface being connected to the side walls,
**characterized in that** the container (12) comprises a grate-like intermediate base (5) arranged parallel to the heating surface (6, 15), wherein the heating surface (6, 15) is arranged along at least one of the side walls of the container (12) and that a drawer (8) is provided on the underside of the intermediate base (5), which drawer is mounted in a sliding manner and can be pulled out through a drawer opening (7) in one of the side walls.

2. The device according to Claim 1, **characterized in that** the heating surface (6, 15) is arranged substantially perpendicular to the side walls of the container (12).

3. The device according to Claim 1 or 2, **characterized in that** it is provided with a closed base (20).

4. The device according to Claim 1 or 2, **characterized in that** feet (4) are arranged on the intermediate base (5) or on the side walls, wherein the feet (4) are the same length as, or longer than, the space between the intermediate base (5) and the lower edge of the side walls.

5. The device according to Claims 1 to 4, **characterized in that** the drawer (8) is mounted in a sliding manner on guide plates (22) arranged on the intermediate base 5.

6. The device according to one of Claims 1 to 5, **characterized in that** the heating surface (6) is configured overlaying in a frame-like manner, at least in parts, along the side walls of the container (12).

7. The device according to one of the Claims 1 to 5, **characterized in that** the heating surface (6, 15) is arranged along a front side (18) of the container (12).

8. The device according to one of Claims 1 to 7, **characterized in that** it is provided with a frame on which the side walls and the heating surface (6, 15) are arranged.

9. The device according to one of Claims 1 to 8, **characterized in that** the intermediate base (5) is provided with slots in the region above the drawer (8) and/or is configured in a grate-like manner.

10. The device according to one of Claims 1 to 9, **characterized in that** the heating surface (6, 15) is tilted inwards to the intermediate base (5), preferably at an angle of up to approx. 5 °.

11. The device according to one of Claims 1 to 10, **characterized in that** the heating surface (6, 15) is made of stainless steel, while the other parts of the container (12) are made of Corten steel or stainless steel.

12. The device according to one of Claims 1 to 11, **characterized in that** the cross section of the container (12) is cubic, triangular, polygonal or semi-circular.

13. The device according to one of Claims 1 to 12, **characterized in that** the heating surface (6, 15) is circumferential along the side walls of the container (12) completely or only in part.

14. The device according to one of Claims 1 to 13, **characterized in that** the side walls comprise longitudinal walls (1, 17), a front side (2, 18) and a rear wall (3, 19).

15. The device according to one of Claims 4 to 14, **characterized in that** at least the longitudinal walls (17), the rear wall (19) and the base (20) have a double-wall configuration and are preferably filled with a heat-insulating substance.

16. The device according to one of Claims 4 to 15, **characterized in that** a chimenea (16) is mounted on the longitudinal walls (17) and the rear wall (19).

17. The device according to one of Claims 1 to 16, **characterized in that** the longitudinal walls (1) and/or the rear wall (3) and/or the front side (2, 18) are continuous and/or are provided with opening and ornaments above the intermediate base (5).

## Revendications

1. Dispositif destiné à griller et à cuire des aliments, comprenant un bac en acier avec des parois latérales et une surface de chauffe, placée majoritairement à l'horizontale, le cas échéant, avec une légère inclinaison vers l'intérieur, destinée à la cuisson d'aliments, qui est reliée avec les parois latérales, **caractérisé en ce que** le bac (12) comporte un fond intermédiaire (5) placé à la parallèle de la surface de chauffe (6, 15), en forme de grille, la surface de chauffe (6, 15) étant placée le long d'au moins l'une des parois du bac (12) et **en ce que** sur la face inférieure du fond intermédiaire (5) est prévu un tiroir (8), qui est logé en coulissement et qui peut se retirer à travers une ouverture pour tiroir (7) dans l'une des parois latérales.

2. Dispositif selon la revendication 1, **caractérisé en ce que** la surface de chauffe (6, 15) est placée sensiblement à la parallèle des parois latérales du bac (12).

3. Dispositif selon la revendication 1 ou 2, **caractérisé en ce qu'**il est doté d'un fond (20) fermé.

4. Dispositif selon la revendication 1 ou 2, **caractérisé en ce que** sur le fond intermédiaire (5) ou sur les parois latérales sont placés des pieds (4), les pieds (4) étant de même longueur ou plus longs que l'écart entre le fond intermédiaire (5) et l'arête inférieure des parois latérale.

5. Dispositif selon l'une quelconque des revendications 1 à 4, **caractérisé en ce que** le tiroir (8) est logé en coulissement sur des tôles de guidage (22) placées sur le fond intermédiaire (5).

6. Dispositif selon l'une quelconque des revendications 1 à 5, **caractérisé en ce que** la surface de chauffe (6) est conçue en forme de cadre, recouvrant au moins par parties le long des parois latérales du bac (12).

7. Dispositif selon l'une quelconque des revendications 1 à 5, **caractérisé en ce que** la surface de chauffe (6, 15) est placée le long d'une face frontale (18) du bac (12).

8. Dispositif selon l'une quelconque des revendications 1 à 7, **caractérisé en ce qu'**il est muni d'un cadre, sur lequel sont placées les parois latérales et la surface de chauffe (6, 15).

9. Dispositif selon l'une quelconque des revendications 1 à 8, **caractérisé en ce que** dans la région au-dessus du tiroir (8), le fond intermédiaire (5) est muni d'encoches et /ou est constitué en forme de grille.

10. Dispositif selon l'une quelconque des revendications 1 à 9, **caractérisé en ce que** la surface de chauffe (6, 15) est inclinée vers l'intérieur en direction du fond intermédiaire (5), de préférence sous un angle d'environ 5°.

11. Dispositif selon l'une quelconque des revendications 1 à 10, **caractérisé en ce que** la surface de chauffe (6, 15) est en acier inoxydable, alors que les autres pièces du bac (12) sont en en acier corten ou en acier inoxydable.

12. Dispositif selon l'une quelconque des revendications 1 à 11, **caractérisé en ce que** la section transversale du bac (12) est cubique, triangulaire polygonale ou semi-circulaire.

13. Dispositif selon l'une quelconque des revendications 1 à 12, **caractérisé en ce que** la surface de chauffe (6, 15) est entièrement périphérique ou seulement en partie, le long des parois latérales du bac (12).

14. Dispositif selon l'une quelconque des revendications 1 à 13, **caractérisé en ce que** les parois latérales comprennent des parois longitudinales (1, 17), une face frontale (2, 18) et une paroi arrière (3, 19).

15. Dispositif selon l'une quelconque des revendications 4 à 14, **caractérisé en ce qu'**au moins les parois longitudinales (17), la paroi arrière (19) et le fond (20) sont réalisés à double paroi et sont remplis de préférence d'une matière thermo-isolante.

16. Dispositif selon l'une quelconque des revendications 4 à 15, **caractérisé en ce que** sur les parois longitudinales (17) et sur la paroi arrière (19) est montée une cheminée (16).

17. Dispositif selon l'une quelconque des revendications 1 à 16, **caractérisé en ce que** les parois longitudinales (1) et/ou la paroi arrière (3) et/ou la face frontale (2, 18) sont continues et/ou au-dessus du fond intermédiaire (5) sont munis d'ajours et d'ornements.
